# EUROPÄISCHE PATENTANMELDUNG

(11) **EP 4 024 678 A1**
(43) Veröffentlichungstag der Anmeldung: **06.07.2022**
(21) Anmeldenummer: 21213174.2
(22) Anmeldetag: 08.12.2021
(51) Int. Cl.: H02K 7/116, H02K 5/20, H02K 9/19, H02K 7/00

(54) **ELEKTROANTRIEB**

(30) Priorität: 21.12.2020 CN 202023104271 U
(71) Anmelder: ZF Friedrichshafen AG, 88046 Friedrichshafen (DE)
(72) Erfinder: Dong, Ye, Shanghai, 201615 (CN); Wang, Yue, Shanghai, 201615 (CN); Ye, Weichen, Shanghai, 201615 (CN)

(57) **Zusammenfassung**

Die vorliegende Erfindung stellt einen Elektroantrieb bereit. Er umfasst ein Elektromotormodul und ein an das Elektromotormodul angeschlossenes Getriebemechanismusmodul, wobei das Elektromotormodul eine an einem Rotor befestigte hohle Rotorwelle umfasst, die Leistung auf das Getriebemechanismusmodul überträgt, wobei das Getriebemechanismusmodul eine Ausgangswelle umfasst, die koaxial innerhalb der Rotorwelle angeordnet ist, wobei die Rotorwelle und die Ausgangswelle entlang einer axialen Richtung des Elektromotormoduls verlaufen, wobei der Elektroantrieb eine zwischen der Rotorwelle und der Ausgangswelle vorgesehene hohle Hülse umfasst, die relativ zu einem Hauptgehäuse des Elektromotormoduls befestigt ist.

## Beschreibung

### Technisches Gebiet

Die vorliegende Erfindung betrifft einen Elektroantrieb, insbesondere ein Elektroantriebssystem mit einer Rotorkühlung.

### Stand der Technik

Bei einem Elektroantrieb mit einer koaxialen Anordnung ist eine Ausgangswelle, die Leistung ausgibt, koaxial innerhalb einer hohlen Rotorwelle eines Elektromotors angeordnet. Zum Kühlen eines Rotors wird in der Regel das Fließen einer Schmierflüssigkeit/Kühlflüssigkeit in einen Spalt zwischen der Rotorwelle und der Ausgangswelle bewirkt. Da sich sowohl die Rotorwelle als auch die Ausgangswelle mit hoher Drehzahl drehen, stellt sich jedoch ein Problem, die Schmierflüssigkeit/Kühlflüssigkeit reibungslos in den Spalt zwischen der Rotorwelle und der Ausgangswelle einzuleiten und davon abzuführen.

### Offenbarung der Erfindung

Die vorliegende Erfindung stellt einen Elektroantrieb bereit, mit dem das obige Problem gelöst wird. Der Elektroantrieb umfasst ein Elektromotormodul und ein an das Elektromotormodul angeschlossenes Getriebemechanismusmodul wobei das Elektromotormodul eine an einem Rotor befestigte hohle Rotorwelle umfasst, die Leistung auf das Getriebemechanismusmodul überträgt, wobei das Getriebemechanismusmodul eine Ausgangswelle umfasst, die koaxial innerhalb der Rotorwelle angeordnet ist, wobei die Rotorwelle und die Ausgangswelle entlang einer axialen Richtung des Elektromotormoduls verlaufen, und wobei der Elektroantrieb eine zwischen der Rotorwelle und der Ausgangswelle vorgesehene hohle Hülse umfasst, die relativ zu einem Hauptgehäuse des Elektromotormoduls befestigt ist.

Gemäß der vorliegenden Erfindung ist zwischen der Rotorwelle und der Ausgangswelle eine relativ zu dem Hauptgehäuse des Elektromotormoduls befestigte hohle Hülse vorgesehen, sodass zwischen der Rotorwelle und der befestigten hohlen Hülse ein ringförmiger Spalt, in dem ein Kühlmittel fließen kann, ausgebildet sein kann. Des Weiteren ist die hohle Hülse relativ zu dem Hauptgehäuse des Elektromotormoduls befestigt, womit eine fluidische Kommunikation des ringförmigen Spalts zwischen der Rotorwelle und der hohlen Hülse mit einer Kühlmittelquelle vereinfacht wird.

### Kurzbeschreibung der Figuren

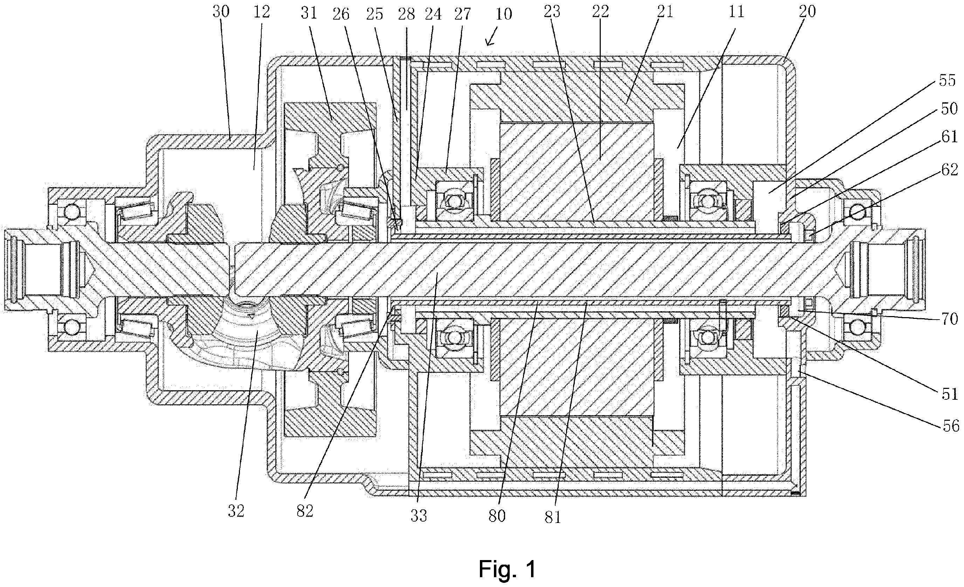

Fig. 1 zeigt eine Schnittdarstellung eines Elektroantriebs nach einem Ausführungsbeispiel der vorliegenden Erfindung.

### Ausführliche Ausführungsformen

Nachfolgend erfolgt eine nähere Beschreibung anhand eines Ausführungsbeispiels der vorliegenden Erfindung unter Bezugnahme auf die beiliegende Zeichnung.

Fig. 1 zeigt einen Elektroantrieb 10 nach einem Ausführungsbeispiel der vorliegenden Erfindung in einer Schnittansicht. Der Elektroantrieb 10 kann ein Elektroantrieb für ein Kraftfahrzeug sein, worauf jedoch die vorliegende Erfindung nicht eingeschränkt wird. Der Elektroantrieb 10 weist ein Elektromotormodul 11 und ein Getriebemechanismusmodul 12 auf. Das Elektromotormodul 11 überträgt Leistung auf das Getriebemechanismusmodul 12, und das Getriebemechanismusmodul 12 überträgt die Leistung auf Räder des Kraftfahrzeugs, um das Fahrzeug anzutreiben. Optional kann der Elektroantrieb 10 ferner ein Wechselrichtermodul (nicht dargestellt) aufweisen, das zum Versorgen des Elektromotormoduls 11 mit Drehstrom dient.

Das Elektromotormodul 11 umfasst ein Hauptgehäuse 20 sowie einen Stator 21 und einen Rotor 22, die in dem Hauptgehäuse 20 aufgenommen sind, wobei der Rotor 22 eine an dem Rotor 22 befestigte hohle Rotorwelle 23 aufweist. Ein Ende der Rotorwelle 23 in der axialen Richtung ist an das Getriebemechanismusmodul 12 gekoppelt. Konkret ist ein dem Getriebemechanismusmodul 12 zugewandtes Ende der Rotorwelle 23 durch ein Lager abgestützt, das in einem Lagersitz angeordnet ist, der in der Stützplatte/Endabdeckung 24 angeordnet ist. Die Stützplatte/Endabdeckung 24 ist zwischen dem Elektromotormodul 11 und dem Getriebemechanismusmodul 12 angeordnet und die Stützplatte/Endabdeckung 24 trennt das Getriebemechanismusmodul 12 von dem Elektromotormodul 11. Die Rotorwelle 23 erstreckt sich durch die Stützplatte/Endabdeckung 24 hindurch in das Getriebemechanismusmodul 12 und ist an einen Getriebemechanismus innerhalb des Getriebemechanismusmoduls 12 gekoppelt. An dem an das Getriebemechanismusmodul 12 gekoppelten Ende der Rotorwelle 23 in der axialen Richtung ist ein Zahnradabschnitt oder ein Ritzel ausgebildet. Ein dem Getriebemechanismusmodul 12 abgewandtes Ende der Rotorwelle 23 ist über ein Lager durch das Hauptgehäuse 20 drehbar abgestützt. Die Stützplatte/Endabdeckung 24 kann einteilig mit dem Hauptgehäuse 20 des Elektromotormoduls 11 oder mit einem Hauptgehäuse des Getriebemechanismusmoduls 12 geformt sein.

Das Getriebemechanismusmodul 12 ist an ein Ende des Elektromotormoduls 11 angeschlossen. In diesem Beispiel kann das Getriebemechanismusmodul 12 ein Hauptgehäuse 30 und einen innerhalb des Hauptgehäuses vorgesehenen Getriebemechanismus umfassen. Der Getriebemechanismus umfasst beispielsweise ein Untersetzungsgetriebe (nicht dargestellt) und ein Differenzial 32. In diesem Beispiel umfasst das Untersetzungsgetriebe ein Antriebsrad mit einem großen Durchmesser und ein angetriebenes Rad mit einem kleinen Durchmesser. Das Antriebsrad und das angetriebene Rad sind an ein und derselben Getriebewelle befestigt und drehen sich somit als Ganzes. Der Zahnradabschnitt oder das Ritzel der Rotorwelle 23 steht in Eingriff mit dem Antriebsrad des Untersetzungsgetriebes, während das angetriebene Rad des Untersetzungsgetriebes Leistung auf das Differenzial 32 überträgt. Das angetriebene Rad des Untersetzungsgetriebes steht in Eingriff mit einem Zahnrad / einer Verzahnung 31 an einem Differenzialgehäuse des Differenzials 32 und treibt somit das Differenzial 32 zum Drehen an. Das Differenzial 32 ist über ein Lager drehbar an einem Gehäuse des Getriebemechanismusmoduls 12 befestigt. Das Differenzial 32 umfasst zwei Ausgangswellen (Halbwellen), wovon sich eine Ausgangswelle 33 koaxial durch die hohle Rotorwelle 23 des Rotors des Elektromotors erstreckt und somit koaxial innerhalb der Rotorwelle 23 angeordnet ist. Die Ausgangswelle 33 ist an einem dem Getriebemechanismusmodul 12 abgewandten Ende über ein Lager drehbar abgestützt. Zwischen der Rotorwelle 23 und der koaxial innerhalb der Rotorwelle 23 angeordneten Ausgangswelle 33 wird ein sich axial erstreckender ringförmiger Spalt begrenzt. Wie unten beschrieben, kann in dem ringförmigen Spalt eine andere hohle Welle/Hülse 80, die an dem Hauptgehäuse 20 des Elektromotormoduls 12 befestigt ist, vorgesehen sein. Hierbei ist darauf hinzuweisen, dass der Getriebemechanismus des Elektroantriebs 10 nach der vorliegenden Erfindung nicht auf das Untersetzungsgetriebe und das Differenzial 32 eingeschränkt wird und vielmehr ein anderer, den Fachleuten auf diesem Gebiet naheliegender Getriebemechanismus sein kann.

Der Elektroantrieb 10 nach der vorliegenden Erfindung umfasst ferner eine zwischen der Rotorwelle 23 und der Ausgangswelle 33 vorgesehene hohle Hülse 80, um somit einen Kühlmittel-Fließkanal zwischen der Rotorwelle 23 und der hohlen Hülse 80 zu bilden, wobei die hohle Hülse relativ zu einem Hauptgehäuse des Elektromotormoduls befestigt ist.

Nachfolgend wird auf ein Kühlsystem des Elektroantriebs 10 der vorliegenden Erfindung näher eingegangen.

Zusammenfassend leitet das Kühlsystem des Elektroantriebs 10 ein Kühlmittel (beispielsweise ein Kühlmittel aus einem ringförmigen Kühlkanal innerhalb des Körpers des Hauptgehäuses 20 des Elektromotormoduls 12) in ein Ende des ringförmigen Spalts zwischen der hohlen Hülse 80 und der Rotorwelle 23 in der axialen Richtung ein und das Kühlmittel fließt dann in dem ringförmigen Spalt entlang der axialen Richtung bis zu dem axial anderen Ende und strömt schließlich aus dem ringförmigen Spalt, womit der Rotor gekühlt wird.

Wie in der Figur gezeigt, weist die hohle Hülse 80 einen kreiszylindrischen Körper 81 auf, an dessen einem Ende ein ringförmiger Flansch 82 vorgesehen ist. Über den Flansch 82 ist die hohle Hülse 80 an die Stützplatte/Endabdeckung 24 angeschlossen. Konkret weist die Stützplatte/Endabdeckung 24 eine beispielsweise kreisförmig ausgebildete Öffnung 26 zum Hindurchführen der Ausgangswelle 33 auf. Der kreiszylindrische Körper 81 der hohlen Hülse 80 geht durch die Öffnung hindurch und ist über den Flansch 82 mittels eines Befestigungselements an den Umfang der Öffnung 26 der Stützplatte/Endabdeckung 24 angeschlossen. In der Figur ist der Flansch 82 an einer dem Getriebemechanismusmodul zugewandten Seite der Stützplatte/Endabdeckung 24 an die Stützplatte/Endabdeckung 24 angeschlossen. Jedoch ist es auch denkbar, dass alternativ dazu der Flansch 82 auf einer dem Getriebemechanismusmodul abgewandten Seite der Stützplatte/Endabdeckung 24 an die Stützplatte/Endabdeckung 24 angeschlossen ist. Zwischen dem Flansch 82 und der Stützplatte/Endabdeckung 24 kann ein Dichtelement vorgesehen sein.

Konkret ist vorgesehen, dass die Stützplatte/Endabdeckung 24 einen sich radial erstreckenden Körper 25 und einen Lagersitz 27, der an einer weiter außen liegenden Stelle als die Öffnung sich ausgehend von dem Körper 25 in Richtung eines Elektromotors erstreckt und im Wesentlichen kreiszylindrisch ausgebildet ist, umfasst. Der Lagersitz 27 dient zum Abstützen der Rotorwelle. Die Rotorwelle 23 erstreckt sich in Richtung des Getriebemechanismusmoduls über das Lager in dem Lagersitz 27 hinaus, jedoch ohne den Körper 25 der Stützplatte/Endabdeckung 24 zu berühren, sodass sie zusammen mit der sich bis zu dem Körper 25 der Stützplatte/Endabdeckung 24 erstreckenden hohlen Hülse 80 einen Eintritt des ringförmigen Spalts zwischen der hohlen Hülse 80 und der Rotorwelle 23 bildet.

Innerhalb des sich radial erstreckenden Körpers 25 der Stützplatte/Endabdeckung 24 kann eine Bohrung 28 ausgebildet sein, welche Bohrung 28 sich radial erstrecken kann. Die Bohrung ist an einem Ende mit einer Kühlmittelquelle verbunden und kommuniziert am anderen Ende mit dem ringförmigen Spalt zwischen der hohlen Hülse 80 und der Rotorwelle 23 fluidisch (nämlich mit dem Eintritt des ringförmigen Spalts verbunden), um Kühlmittel in den ringförmigen Spalt einzuleiten. Beispielsweise kann die Bohrung mit einem innerhalb des Körpers des Hauptgehäuses 20 des Elektromotormoduls 12 ausgebildeten Kühlkanal verbunden sein. Des Weiteren kann zwischen der äußeren Oberfläche eines Endes der Rotorwelle 23 und dem Lagersitz 27 ein Dichtelement vorgesehen sein, um das Fließen des Kühlmittels in Richtung des Lagers zu verhindern.

Wie in der Figur gezeigt, erstreckt sich der kreiszylindrische Körper 81 der hohlen Hülse 80 an einem dem Getriebemechanismusmodul 12 abgewandten Ende über die Rotorwelle 23 hinaus, womit der Eintritt des ringförmigen Spalts zwischen der hohlen Hülse 80 und der Rotorwelle 23 begrenzt wird. Die Ausgangswelle 33 erstreckt sich über die hohle Hülse 80 hinaus. Des Weiteren ist an diesem Ende ein die hohle Hülse 80 umgebendes Stützelement 50 vorgesehen. Zwischen dem Stützelement 50 und der hohlen Hülse 80 ist ein erstes Dichtelement 61 vorgesehen, um das Fließen des Kühlmittels in einen ringförmigen Spalt zwischen der hohlen Hülse 80 und der Ausgangswelle 33 zu verhindern.

Der Elektroantrieb umfasst ferner einen Lagersitz für ein Lager der Rotorwelle 23. Der Lagersitz kann einteilig mit dem Hauptgehäuse des Elektromotormoduls ausgeformt oder an das Stützelement angeschlossen sein. Zwischen dem Lagersitz für das Lager der Rotorwelle 23 und dem Stützelement 50 kann ein ringförmiger Hohlraum 55 begrenzt sein. Der Hohlraum 55 ist mit einem Austritt des ringförmigen Spalts zwischen der hohlen Hülse 80 und der Rotorwelle 23 verbunden. In dem Stützelement 50 kann ein Kanal 56 vorgesehen sein, der den ringförmigen Hohlraum 55 mit einer externen Kühlmittelquelle verbindet.

Zwischen dem Stützelement 50 und dem sich über die Rotorwelle 23 hinaus erstreckenden Teil der Ausgangswelle 33 ist ein zweites Dichtelement 62 vorgesehen, sodass zwischen der hohlen Hülse 80, der Ausgangswelle 33 und dem Stützelement 50 ein mit einem Fließraum zwischen der hohlen Hülse 80 und der Ausgangswelle 33 fluidisch kommunizierender Hohlraum 70 ausgebildet ist. In dem Stützelement 50 ist ferner ein Durchgangsloch (nicht dargestellt), das den Hohlraum 70 mit der Außenseite verbinden kann, ausgebildet. Jedoch kann alternativ dazu das zweite Dichtelement 62 entfallen und stattdessen ist an der rechten Seite des Lagers der Ausgangswelle 33 ein Dichtelement vorgesehen, sodass ein größerer Hohlraum erzielt werden kann und Schmierflüssigkeit, die durch den Fließraum zwischen der hohlen Hülse 80 und der Ausgangswelle 33 fließt und aus dem Getriebemechanismus stammt, das Lager der Ausgangswelle 33 schmieren kann.

Das Stützelement 50 kann einteilig mit dem Hauptgehäuse 20 des Elektromotormoduls 11 ausgeformt sein. Des Weiteren kann das Stützelement 50 an das Hauptgehäuse 20 des Elektromotormoduls 11 angeschlossen sein und umfasst einen Lagersitz für das Lager der Ausgangswelle 33. Das Lager der Rotorwelle 23 ist durch das Hauptgehäuse 20 abgestützt.

In Fig. 1 ist das Stützelement 50 einteilig mit dem Hauptgehäuse 20 des Elektromotormoduls 11 geformt, und der Lagersitz für das Lager der Ausgangswelle 33 wird durch ein separates Bauteil gebildet. Jedoch wird die vorliegende Erfindung nicht darauf eingeschränkt und der Lagersitz für das Lager der Ausgangswelle 33 kann alternativ dazu an dem Stützelement 50 ausgebildet sein. Soweit strukturell und räumlich möglich, kann das Stützelement 50 auch durch ein relativ zu dem Hauptgehäuse 20 des Elektromotormoduls 11 befestigtes, separates Bauteil gebildet werden. Trotz der bisherigen Beschreibung der konkreten Ausführungsform der vorliegenden Erfindung versteht sich für Fachleute auf diesem Gebiet, dass diese nur beispielhaft erläutert wurde und der Schutzumfang der Erfindung durch die beigefügten Ansprüche definiert wird. Der Fachmann auf diesem Gebiet kann ohne Abweichung vom Prinzip und der Essenz der vorliegenden Erfindung verschiedene Änderungen oder Modifikationen für die Ausführungsformen durchführen, aber solche Änderungen oder Modifikationen sollen als vom Schutzumfang der vorliegenden Erfindung gedeckt angesehen werden.

## Patentansprüche

1. Elektroantrieb, umfassend ein Elektromotormodul und ein an das Elektromotormodul angeschlossenes Getriebemechanismusmodul, wobei das Elektromotormodul eine an einem Rotor befestigte hohle Rotorwelle umfasst, die Leistung auf das Getriebemechanismusmodul überträgt, wobei das Getriebemechanismusmodul eine Ausgangswelle umfasst, die koaxial innerhalb der Rotorwelle angeordnet ist, wobei die Rotorwelle und die Ausgangswelle entlang einer axialen Richtung des Elektromotormoduls verlaufen, **dadurch gekennzeichnet, dass**
der Elektroantrieb eine zwischen der Rotorwelle und der Ausgangswelle vorgesehene hohle Hülse umfasst, die relativ zu einem Hauptgehäuse des Elektromotormoduls befestigt ist.

2. Elektroantrieb nach Anspruch 1, **dadurch gekennzeichnet, dass** zwischen der hohlen Hülse und der Rotorwelle ein ringförmiger Raum ausgebildet ist, dessen zwei Enden jeweils mit einem Kühlmittelfließweg verbunden sind.

3. Elektroantrieb nach Anspruch 2, **dadurch gekennzeichnet, dass** der Elektroantrieb eine zwischen dem Elektromotormodul und dem Getriebemechanismusmodul vorgesehene Stützplatte/Endabdeckung umfasst, die das Getriebemechanismusmodul von dem Elektromotormodul trennt, wobei sich die Ausgangswelle durch eine Öffnung in der Stützplatte/Endabdeckung erstreckt, und wobei die hohle Hülse an die Stützplatte/Endabdeckung angeschlossen ist.

4. Elektroantrieb nach Anspruch 3, **dadurch gekennzeichnet, dass** die Stützplatte/Endabdeckung eine Öffnung aufweist und sich die Ausgangswelle durch die Öffnung in der Stützplatte/Endabdeckung erstreckt.

5. Elektroantrieb nach Anspruch 4, **dadurch gekennzeichnet, dass** die hohle Hülse einen kreiszylindrischen Körper und einen ringförmigen Flansch, der an einem dem Getriebemechanismusmodul zugewandten Ende des kreiszylindrischen Körpers angeordnet ist, umfasst, wobei die hohle Hülse über den ringförmigen Flansch an die Stützplatte/Endabdeckung angeschlossen ist.

6. Elektroantrieb nach Anspruch 5, **dadurch gekennzeichnet, dass** sich der kreiszylindrische Körper der hohlen Hülse durch die Öffnung in der Stützplatte/Endabdeckung erstreckt und der ringförmige Flansch auf einer dem Getriebemechanismusmodul zugewandten Seite an die Stützplatte/Endabdeckung angeschlossen ist.

7. Elektroantrieb nach Anspruch 4, **dadurch gekennzeichnet, dass** die Stützplatte/Endabdeckung einen sich radial erstreckenden Körper und einen Lagersitz, der sich an einer weiter außen liegenden Stelle als die Öffnung ausgehend von dem Körper in Richtung eines Elektromotors erstreckt und im Wesentlichen kreiszylindrisch ausgebildet ist, umfasst, wobei der Lagersitz zum Abstützen der Rotorwelle dient, wobei innerhalb des Körpers der Stützplatte/Endabdeckung eine sich radial erstreckende Bohrung ausgebildet ist, die an einem Ende mit einer Kühlmittelquelle verbunden ist und am anderen Ende mit einem ringförmigen Spalt zwischen der hohlen Hülse und der Rotorwelle fluidisch kommuniziert.

8. Elektroantrieb nach Anspruch 4, **dadurch gekennzeichnet, dass** an einem dem Getriebemechanismusmodul abgewandten Ende der hohlen Hülse ein die hohle Hülse umgebendes Stützelement vorgesehen ist, wobei zwischen dem Stützelement und der hohlen Hülse ein Dichtelement vorgesehen ist.

9. Elektroantrieb nach Anspruch 8, **dadurch gekennzeichnet, dass** der Elektroantrieb ferner einen Lagersitz für ein Lager der Rotorwelle umfasst, wobei der Lagersitz an das Stützelement angeschlossen ist, sodass zwischen dem Lagersitz und dem Stützelement ein ringförmiger Hohlraum begrenzt ist, der mit einem Austritt des ringförmigen Spalts zwischen der hohlen Hülse und der Rotorwelle verbunden ist.

10. Elektroantrieb nach Anspruch 9, **dadurch gekennzeichnet, dass** das Stützelement an das Hauptgehäuse des Elektromotormoduls angeschlossen ist und das Stützelement ferner mit einem Lagersitz für ein Lager der Ausgangswelle versehen ist.

11. Elektroantrieb nach Anspruch 1, **dadurch gekennzeichnet, dass** das Getriebemechanismusmodul ein Untersetzungsgetriebe und ein Differenzial umfasst, wobei die Rotorwelle über das Untersetzungsgetriebe an ein Differenzialgehäuse des Differenzials gekoppelt ist und es sich bei der Ausgangswelle um eine Halbwelle des Differenzials handelt.

12. Elektroantrieb nach Anspruch 3, wobei die Stützplatte/Endabdeckung einteilig mit dem Hauptgehäuse des Elektromotormoduls oder mit einem Hauptgehäuse des Getriebemechanismusmoduls geformt ist.
